# EUROPÄISCHE PATENTANMELDUNG

(11) **EP 0 647 846 A1**
(43) Veröffentlichungstag der Anmeldung: **12.04.1995**
(21) Anmeldenummer: 94112460.4
(22) Anmeldetag: 10.08.1994
(51) Int. Cl.: G01N 21/90

(54) **Verfahren und Anordnung zur Inspektion lichtdurchlässiger Gegenstände**

(30) Priorität: 08.10.1993 CH 3040/93; 05.01.1994 CH 20/94
(71) Anmelder: ELPATRONIC AG, CH-6303 Zug (CH)
(72) Erfinder: Burri, Karl-Georg, CH-8942 Oberrieden (CH); Gysi, Peter, CH-5454 Bellikon (CH)

(57) **Zusammenfassung**

Gemäss dem erfindungsgemässen Verfahren wird die optische Inspektion eines lichtdurchlässigen Gegenstandes (3), insbesondere die optische Inspektion eines nach innen gewölbten Behälterbodens, wobei der Gegenstand (3) zwischen einer Strahlungsquelle (1) und einem Bildaufnahmegerät (2) positioniert und ein Bild des Gegenstandes aufgenommen und verarbeitet wird, dadurch verbessert, dass in Strahlengänge zwischen Strahlungsquelle (1) und Bildaufnahmegerät (2) mindestens ein optisches Korrekturelement (7.1) eingesetzt wird, das Strahlengänge, die zu unerwünschten Dunkel- oder Schwarzstellen auf dem Bild führen, derart korrigiert, dass solche Dunkel- oder Schwarzstellen verhindert oder aufgehellt werden, sodass ein für eine Bildanalyse genügendes Bild erzeugt wird.

## Beschreibung

Die Erfindung liegt auf dem Gebiete der optischen Inspektion mittels Bildverarbeitung und betrifft ein Verfahren und eine Anordnung gemäss den Oberbegriffen der entsprechenden, unabhängigen Patentansprüche zur optischen Inspektion von lichtdurchlässigen Gegenständen, insbesondere von Behältern mittels Bildverarbeitung.

Es ist bekannt, lichtdurchlässige Behälter mittels Bildverarbeitung zu inspizieren. Derartige Inspektionen können beispielsweise einer Produktionskontrolle, einer Lesung von Markierungen oder einer Prüfung auf Defektfreiheit und Sauberkeit bei Mehrwegbehältern dienen. Für die Inspektion wird üblicherweise mit einem Durchlichtverfahren, das heisst mit einer Anordnung, in der mindestens der zu inspizierende Teil des Behälters zwischen einer direkten oder indirekten Lichtquelle und einem Bildaufnahmegerät, beispielsweise einer Kamera, positioniert wird, ein Bild im weitesten Sinne des Wortes erzeugt. Dieses Bild wird mit bekannten Methoden analysiert, indem beispielsweise auf dem Bild Dunkel- oder Schwarzstellen detektiert und/oder interpretiert werden. Je nach Resultat der Bildanalyse werden dann beispielsweise Steuermittel aktiviert, die den betreffenden Behälter aus der Weitenverarbeitung ausschleusen.

Verschmutzungen, Markierungen, Defekte etc. werden auf den erzeugten Bildern üblicherweise erkannt als Dunkel- oder Schwarzstellen auf einem andersartigen, häufig hellen Hintergrund, der die saubere, intakte, unmarkierte Behälterwand darstellt. Es zeigt sich nun aber, dass nicht nur durch Markierungen, Verschmutzungen etc. bedingte Dunkel- und Schwarzstellen auf den Bildern auftreten können, sondern auch solche, die durch die Gefässwand selbst, das heisst durch deren Geometrie und/oder Oberflächenbeschaffenheit bedingt sind oder durch optisches Zusammenwirken von nicht zu detektierenden Flüssigkeitsresten mit der Behälterwandgeometrie, derart, dass insbesondere durch Reflexion an den Oberflächen der Behälterwand deren Durchleuchtung inhomogen wird, das heisst, es entstehen beispielsweise Dunkel- oder Schwarzstellen auf dem Bild, die insbesondere bei kontinuierlich und schnell arbeitenden Anordnungen sich auch bewegen oder fluktuieren können. An diesen Stellen wird ein Detektieren von Fehlern, Verschmutzungen, Markierungen etc. mittels Bildverarbeitung unmöglich oder mindestens erheblich erschwert, da der Kontrast zwischen Hintergrund und dem Bild eines zu detektierendem Objekts vermindert oder aufgehoben wird.

Es ist nun die Aufgabe der Erfindung, die obengenannten Nachteile einer Inspektion von strahlendurchlässigen, insbesondere lichtdurchlässigen Gegenständen mittels Bildverarbeitung derart zu beheben, dass im wesentlichen ohne Erhöhung der Ansprüche an eine verwendete Strahlungsquelle, insbesondere Lichtquelle, das Bildaufnahmegerät und an die Bildverarbeitungs-Elektronik eine Inspektion mit befriedigendem Resultat möglich wird, auch wenn der zu inspizierende Gegenstand oder Bereich des Gegenstandes derart beschaffen ist, dass sein in einem üblichen Durchstrahlungsverfahren oder Durchlichtverfahren erzeugtes Bild mit oder ohne Restflüssigkeit die Bildverarbeitung störende Dunkel- und/oder Schwarzstellen aufweist.

Diese Aufgabe wird gelöst durch das erfindungsgemässe Inspektionsverfahren und die erfindungsgemässe Inspektionsanordnung, wie sie in den Patentansprüchen definiert sind.

Das erfindungsgemässe Verfahren und die Anordnungen basieren darauf, Strahlengänge von der Strahlungs- bzw. Lichtquelle zum Bildaufnahmegerät durch mindestens ein optisches Korrekturelement derart zu korrigieren, dass eine für die Ansprüche der verwendeten Mittel zur Bildverarbeitung genügend homogene Helligkeit des Bildes des zu inspizierenden Gegenstandes oder Bereichs des zu inspizierenden Gegenstandes entsteht, das heisst mit anderen Worten, das Korrekturelement bewirkt eine Aufhellung von unerwünschten, meist durch Reflexion an den Oberflächen der Behälterwand bedingte Dunkel- oder Schwarzstellen auf dem Bilde des zu inspizierenden Gegenstandes, derart, dass auch an diesen Stellen eine befriedigenden Inspektion möglich ist.

Das optische Korrekturelement kann auf zwei Arten wirken. Einerseits kann das optische Korrekturelement die störende Reflexion dadurch kompensieren, dass es Licht aus der Lichtquelle (oder andere Strahlung aus einer Strahlungsquelle) zusätzlich bricht oder reflektiert derart, dass ein Strahlengang entsteht, der von der Lichtquelle zum Bildverarbeitungsgerät verläuft, wodurch durch die erste Reflexion allein entstehende Dunkel- oder Schwarzstellen aufgehellt oder vermieden werden können. Andererseits kann das optische Korrekturelement die optische Wirksamkeit der Oberfläche des zu inspizierenden Gegenstandes örtlich derart verändern, dass die störende Reflexion verhindert oder mindestens vermindert wird und dass dadurch die oben genannten Dunkel- oder Schwarzstellen aufgehellt oder verhindert werden können. Ein optisches Korrekturelement, mit dem die Reflexion an Bereichen einer Oberfläche verhindert oder vermindert wird, besteht aus einem Material, das optisch dichter ist als Luft, vorteilhaiterweise möglichst ähnliche, optische Eigenschaften aufweist wie das Material des zu inspizierenden Gegenstandes, und es schliesst dicht an dessen Oberfläche an, derart, dass möglichst kein optisch wirksamer Luftspalt zwischen den beiden Materialien auftritt. Ein Lichtstrahlen brechendes oder reflektierendes Korrekturelement ist beispielsweise ein entsprechend positioniertes Prisma, eine Linse, ein Spiegel oder ähnliche bekannte optisch wirksame Elemente, wobei in diesem Falle die optischen Eigenschaften des Korrekturelementes sich nach der notwendigen Brechung bzw. Reflexion richten und nicht nach den optischen Eigenschaften des Materials des zu inspizierenden Gegenstandes. Ausführungsvarianten von Korrekturelementen, die gleichzeitig Reflexion verhindern und eine Brechung erzeugen, sind denkbar.

Als optische Korrekturelemente können also lichtdurchlässige Körper mit möglichst ähnlichen optischen Eigenschaften, wie sie die Behälterwand aufweisen, lichtdurchlässige Flüssigkeiten mit ebensolchen optischen Eigenschaften, Licht-reflektierende Flächen (z.B. Spiegel), Licht-brechende Körper (z.B. Prismen, Linsen) oder Kombinationen der genannten Elemente eingesetzt werden. Das oder die optischen Korrekturelemente können zwischen Lichtquelle und zu inspizierendem Gegenstand und/oder zwischen zu inspizierendem Gegenstand und Bildaufnahmegerät in die entsprechenden Strahlengänge eingesetzt werden.

Vorzugsweise wird für die Inspektion diffuses, weisses, also sichtbares Licht verwendet. Das erfinderische Verfahren und die erfinderische Anordnung sind aber auch entsprechend anwendbar in Verbindung mit anderen Lichtqualitäten (polarisiertes, farbiges oder gerichtetes Licht) und auch mit elektromagnetischen Strahlungen anders als sichtbares Licht, für die die Brechungs- und Reflexionsgesetze wie für Licht gültig sind. Das heisst mit anderen Worten, die Lichtquelle kann allgemein durch eine beinahe beliebige Strahlungsquelle ersetzt werden, wobei das oder die Korrekturelemente dazu entsprechend ausgebildet sein müssen. Die in diesem Text verwendeten Ausdrücke "lichtdurchlässig" und "optisch" sind in einem entsprechend erweiterten Sinne zu verstehen.

Ausgestaltung und Positionierung des oder der optischen Korrekturelemente sind in sehr hohem Masse von der Inspektionsanordnung und von dem zu inspizierenden Gegenstand abhängig. Sie können mit strahlenoptischen Überlegungen ermittelt werden, die einerseits von einer gewünschten, homogenen Beleuchtung der Bildfläche und andererseits von der durch die Lichtquelle gelieferten Lichtstrahlung ausgehen.

Es zeigt sich, dass es sehr aufwendig ist, die unerwünschten Duhkelzonen auf dem erzeugten Bilde durch entsprechende optische Korrektur ganz zum Verschwinden zu bringen. Es genügt aber eine Aufhellung dieser Stellen durch die beschriebene optische Korrektur derart, dass für die jeweils zur Verfügung stehende Bildauswertung genügende Kontraste möglich werden.

Im folgenden sollen nun anhand von Figuren einige beispielhafte Ausführungsformen von Inspektionsanordnungen mit optischen Korrekturelementen beschrieben werden. Die allen diesen Ausführungsformen zugrunde liegende Anwendung ist die Inspektion von Behälterböden mit Dom, das heisst nach innen gewölbten Behälterböden. Dies bedeutet aber in keiner Weise, dass das erfindungsgemässe Inspektionsverfahren und die erfindungsgemässe Inspektionsanordnung auf eine Anwendung an derartigen Behälterböden beschränkt sind. Wie bereits eingangs erwähnt, können die erfindungsgemässe Anordnung und das erfindungsgemässe Verfahren mit denselben Vorteilen zur Inspektion beliebiger, lichtdurchlässiger Gegenstände entsprechend angewendet werden. Es erwachsen dabei in allen denjenigen Fällen Vorteile, in denen bei einer bestimmten Kombination von Inspektionsanordnung, Geometrie und/oder Oberflächenbeschaffenheit des zu inspizierenden Gegenstandes eine Inspektion nach dem Stande der Technik erschweren oder verunmöglichen durch Dunkel- oder Schwarzstellen auf dem erzeugten Bild.

In den Figuren zeigen:
- **Figur 1**: eine Anordnung gemäss dem Stande der Technik zur Inspektion eines Behälterbodens mit Dom;
- **Figur 2**: ein Bild eines Behälterbodens mit Dom, erzeugt durch die Anordnung gemäss Figur 1 mit möglichen Dunkel- oder Schwarzstellen;
- **Figur 3**: einige unkorrigierte Strahlengänge durch einen Behälterboden mit Dom;
- **Figur 4**: zwei beispielhafte, erfindungsgemäss korrigierte Strahlengänge durch einen Behälterboden mit Dom;
- **Figur 5**: eine beispielhafte Inspektionsanordnung mit lichtdurchlässigem, festem optischem Korrekturelement;
- **Figur 6**: eine beispielhafte Inspektionsanordnung mit lichtdurchlässigem, flüssigem optischem Korrekturelement;
- **Figur 7**: ein Detail einer beispielhaften Inspektionsanordnung mit Spiegel als optisches Korrekturelement;
- **Figur 8**: eine beispielhafte Ausführungsform für ein optisches Korrekturelement zur Inspektion einer 0,5 l Softdrink-Flasche aus PET.
- **Figur 9**: eine weitere Ausführungsform des optischen Korrekturelementes zur Inspektion einer 0,5 l Softdrink-Flasche aus PET.

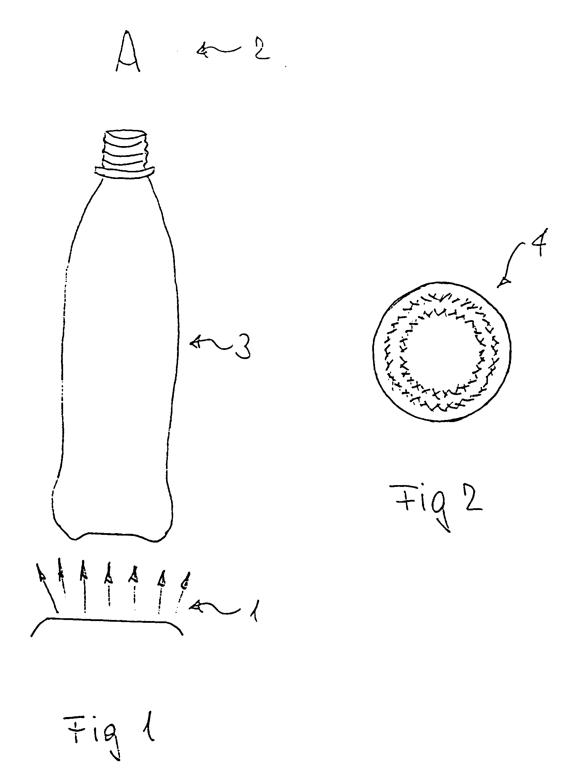

**Figur 1** zeigt schematisch eine Anordnung zur Inspektion von Flaschenböden, wie sie gemäss dem Stande der Technik zur Anwendung kommt. Die Anordnung weist beispielsweise eine Quelle 1 für weisses, diffuses Licht, ein Bildaufnahmegerät 2, beispielsweise eine Kamera, und Mittel (nicht dargestellt) zur Positionierung des zu inspizierenden Behälters 3 zwischen Lichtquelle und Kamera auf. Üblicherweise sind die Mittel zur Positionierung des Behälters 3 derart ausgestaltet, dass in sehr schneller Folge nacheinander Behälter positioniert werden können.

**Figur 2** zeigt ein mit der Anordnung gemäss Figur 1 erzeugtes Bild 4 dem Behälterbodens. Auf diesem können bedingt durch die Geometrie des Domes mit oder ohne Zusammenwirken mit Restflüssigkeit, die im Behälter vorhanden sein kann und nicht detektiert werden soll, in den schraffiert dargestellten Zonen Dunkel- oder Schwarzstellen auftreten, die die Detektion von Verschmutzungen, Defekten, Markierungen etc. in denselben Zonen verunmöglichen oder erschweren können. Ist der Behälter nicht genau zentriert, können sich die Zonen verschieben. Sind die Dunkel- oder Schwarzstellen durch Restflüssigkeit bedingt, können sie in einem schnellen Prozess, in dem die Restflüssigkeit sich während der Bildaufnahme noch bewegen kann, in asymmetrischer Form auftreten und sich während der Bildaufnahme sogar bewegen (fluktuierend oder dynamisch sein).

**Figur 3** zeigt in einem grösseren Massstab und an einem Schnitt durch einen seitlichen Bereich des Behälterbodens den Strahlendurchgang durch den Behälterboden, wenn dieser gemäss dem Stande der Technik (Anordnung gemäss Figur 1) inspiziert wird. Die Figur zeigt den geschnittenen Behälterboden 5 am Rande des Domes mit einer geringen Menge von Restflüssigkeit 6. Der Dom ist nicht vollständig dargestellt, er würde in der Figur rechts anschliessen. Die Figur zeigt ferner fünf beispielhafte Strahlendurchgänge A, B, C, D, E durch den dargestellten Bereich des Behälterbodens. Wünschbar für eine homogene Helligkeit der Bildfläche sind nun, wie dargestellt, Strahlenverläufe, die in möglichst homogener Dichte auf die Bildfläche (in der Figur oben) fallen. Die Figur zeigt, dass derartige Strahlen in den Bereichen, in denen die Strahlengänge A, B, C verlaufen von einer unter dem Behälterboden positionierten diffusen Lichtquelle geliefert werden können (A', B', C'). Die Figur zeigt aber ebenso, dass Strahlen D und E nicht von der genannten Lichtquelle geliefert werden können, da D aus der Richtung D' kommen müsste, E irgendwo aus der Wand 5 selbst. Das heisst mit anderen Worten, dass bei alleiniger Verwendung der Lichtquelle (Stand der Technik) an den Stellen D und E keine oder weniger Strahlen auf die Bildfläche geraten und dadurch an diesen Stellen entsprechende Dunkel- und/oder Schwarzstellen auftreten können, wie dies auch in der Figur 2 dargestellt ist.

**Figur 4** zeigt nun denselben Bereich eines Behälterbodens 5, wie er in der Figur 3 dargestellt ist und ebenfalls die gewünschten Strahlen D und E auf die Bildfläche. Im Bereiche des Domrandes ist auch schematisch ein optisches Korrekturelement 7 dargestellt. Dieses schliesst mindestens teilweise dicht (ohne Luftspalt) an den Behälterboden an und kann dort zur Verhinderung oder Verminderung der Reflexion des Strahles E beitragen, sodass dieser (Richtung E'') von der diffusen Lichtquelle geliefert werden kann. Für den Strahl D wirkt das Korrekturelement als Prisma, derart, dass ein Strahl der diffusen Lichtquelle in Richtung D'' in die Richtung des gewünschten Strahls D gebrochen und an der Behälteroberfläche reflektiert wird.

Es zeigt sich, dass ein Korrekturelement, wie es in der Figur 4 schematisch dargestellt ist, die unerwünschten Dunkel- oder Schwarzstellen aufhellt, auch wenn diese wie bereits oben erwähnt, nicht symmetrisch und/oder fluktuierend sind. Dies heisst mit andern Worten, dass das erfindungsgemässe Verfahren, das ein derartiges Korrekturelement einsetzt, auch den Anforderungen beispielsweise moderner Abfüllinien genügt, die mit sehr hohen Durchsätzen arbeiten.

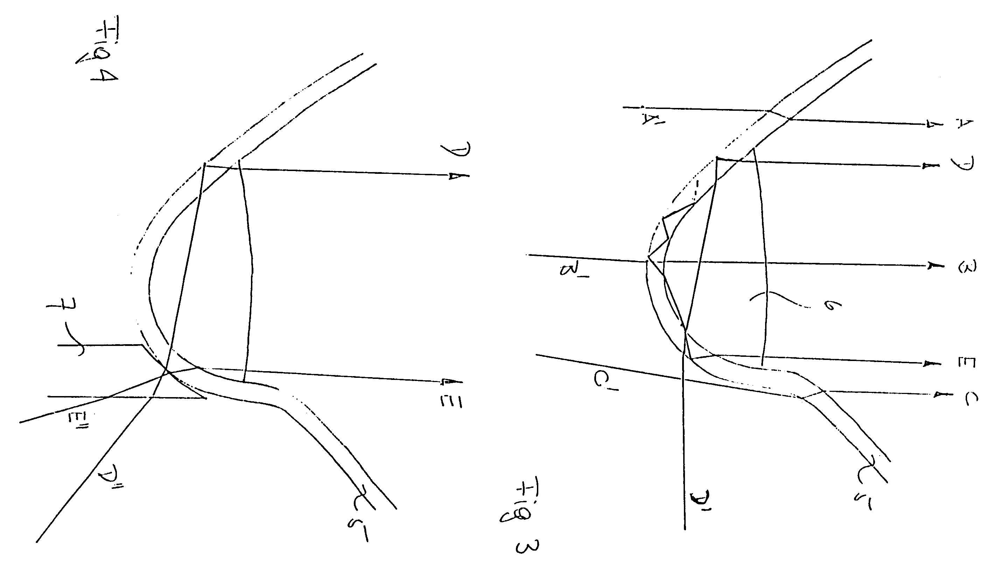

**Figuren 5 bis 7** zeigen nun in einer sehr schematischen Weise beispielhafte Ausführungsformen für die erfindungsgemässe Anordnung zur Inspektion von Behälterböden mit Dom, die verschiedene optische Korrekturelemente aufweisen. Es handelt sich wiederum um Anordnungen für die Inspektion von Behälterböden mit Dom, die in jedem Falle eine Lichtquelle 1 für diffuses, weisses Licht ein Bildaufnahmegerät 2 und Mittel zur Positionierung eines zu inspizierenden Behälters 3 aufweisen. Wie bereits eingangs erwähnt, sind das erfindungsgemässe Verfahren und die erfindungsgemässe Anordnung aber nicht auf eine derartige Anwendung beschränkt. Für weitere Anwendungen muss die Ausgestaltung und/oder Position des oder der Korrekturelemente entsprechend angepasst werden.

**Figur 5** zeigt eine Anordnung mit einem optischen Korrekturelement 7.1 in der Form eines lichtdurchlässigen Körpers mit gegenüber Luft erhöhter optischer Dichte, vorteilhafterweise optisch etwa gleich dicht wie das Behältermaterial. Dieser Körper hat auf der der Lichtquelle zugewandten Seite eine im wesentlichen senkrecht zu einer Verbindungslinie Lichtquelle-Kamera gerichtete, im wesentlichen ebene Oberfläche und eine einem Negativ des Domes entsprechende, dem Behälter zugewandte Oberfläche. Vorteilhaftenweise ist der Korrekturkörper 7.1 Bestandteil des Positionierungsmittels, mit dem der zu inspizierende Behälter in der Position zwischen Kamera und Lichtquelle festgehalten wird, und übt einen leichten Druck gegen den Dom aus. Dadurch liegt der Korrekturkörper dicht am Dom an und korrigiert dadurch weitgehend die nicht erwünschten optischen Phänomene an der Aussenoberfläche des Domes, die in der Figur 3 mit den Strahlengängen D und E dargestellt sind. Damit der Korrekturkörper optisch wirklich gut an den Behälterboden anschliesst, ist es auch vorstellbar, dass zwischen Korrekturkörper und Behälterboden Wasser gepresst wird oder dass der Korrekturkörper auf seiner dem Behälterboden zugewanden Seite mit einem gallertartigen Medium beschichtet ist.

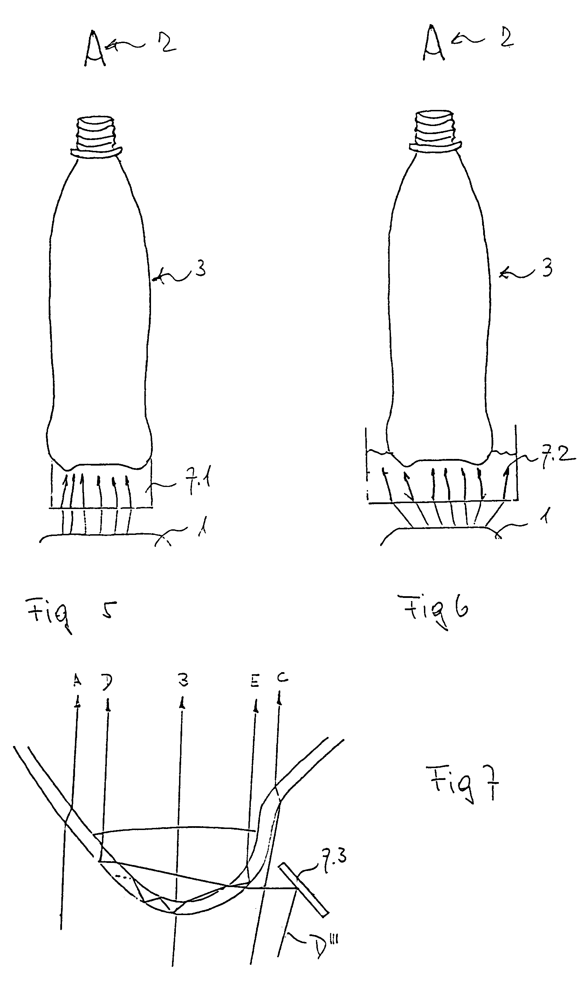

**Figur 6** zeigt eine Anordnung mit einem Volumen einer Flüssigkeit als optischem Korrekturelement (Korrekturflüssigkeit 7.2), wobei die Flüssigkeit vorteilhafterweise im wesentlichen dieselben optischen Eigenschaften aufweist wie das Behältermaterial. Die Wirkungsweise der Korrekturflüssigkeit 7.2 ist dieselbe wie die Wirkungsweise des im Zusammenhang mit der Figur 5 beschriebenen Korrekturkörpers. Gegenüber diesem weist sie aber den Vorteil auf, dass sie unerwünschte optische Phänomene, die von örtlichen Rauhigkeiten des Behälterbodens herrühren, besser korrigiert als der Korrekturkörper, da sich die Flüssigkeit natürlich besser an derartige Rauheiten (Unebenheiten) der Oberfläche anschliesst. Durch entsprechende Wahl der Flüssigkeit (gute Benetzung des Behältermaterials) und entsprechendes Einbringen des Behälters in die Flüssigkeit wird vorteilhafterweise dafür gesorgt, dass sich in der Flüssigkeit und insbesondere an der Behälteroberfläche keine Blasen bilden, die ihrerseits zu den durch die Erfindung zu verhindernden unerwünschten optischen Phänomenen und dadurch zu Missinterpretationen der verarbeiteten Bilder führen können. Es zeigt sich, dass für die Inspektion von PET-Flaschen Wasser als Korrekturflüssigkeit geeignet ist. Anstelle einer Flüssigkeit kann auch ein Gel oder ein gallertartiger Körper zur Abnwendung kommen.

Selbstverständlich kann auch die andere Seite (Innenseite) des Behälterbodens zur Verbesserung der Bildinterpretation mit einer Flüssigkeit bedeckt werden. Ein nicht hohler zu inspizierender Gegenstand wird vorteilhafterweise ganz in die Flüssigkeit eingetaucht.

**Figur 7** zeigt in einer Detaildarstellung, die den Darstellungen der Figuren 3 und 4 entspricht, eine erfindungsgemässe Anordnung mit einem reflektierenden optischen Korrekturelement in der Form eines Spiegels 7.3. Es ist aus der Figur deutlich ersichtlich, dass der bereits im Zusammenhang mit den Figuren 3 und 4 bereits erwähnte, für eine homogene Bildhelligkeit wünschbare Strahl D mit Hilfe des Spiegels 7.3 derart reflektiert wird, dass er (Richtung D''') von der verwendeten diffusen Lichtquelle geliefert werden kann.

In derselben Weise wie ein Spiegel wirkt auch das bereits im Zusammenhang mit der Figur 4 beschriebene optische Korrekturelement 7, eine entsprechend eingesetzte Linse oder ein anderes in gleicher Weise wirksames optisches Element.

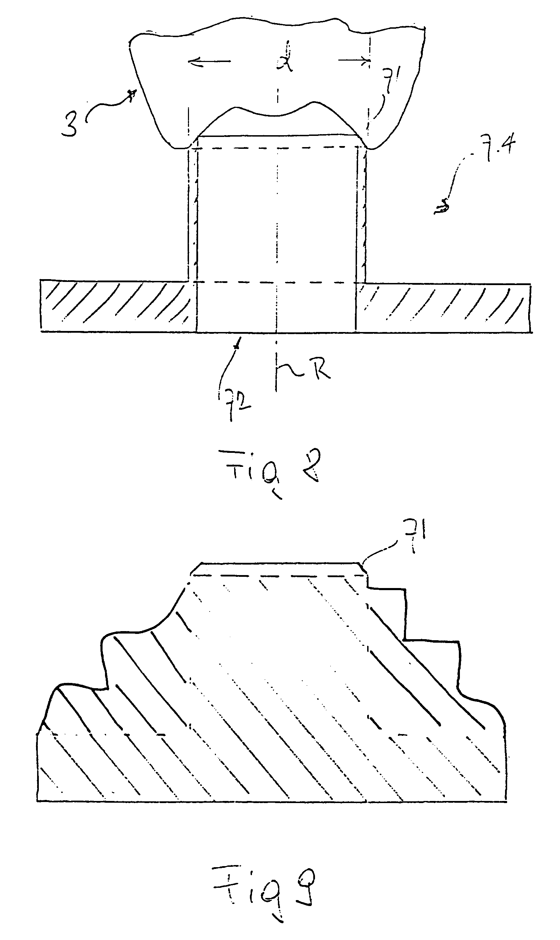

**Figur 8** zeigt noch im Detail ein vorteilhaftes, optisches Korrekturelement 7.4 für eine Inspektionsanordnung zur Inspektion von Behältern 3 mit einem Boden mit Dom, insbesondere für eine Inspektion von 0,5l Softdrink-Flaschen aus PET zwecks Überprüfung der Reinigung, Prüfung auf Stress-Cracking (Ermüdungsrisse), Hazing (Mattheit) oder Lesung einer entsprechenden Markierung. Das für diese Anordnung eingesetzte optische Korrekturelement ist ein Körper aus Plexiglas im wesentlichen in der Form eines Hohlzylinders, dessen dem Behälter zugewandte Stirnseite 71 dem Dom der zu inspizierenden Flasche angepasst ist. Die Lichtquelle ist im Bereich der vom Behälter abgewandten Öffnung 72 des Hohlzylinders zu positionieren. Die Lichtquelle kann eine direkte sein, das heisst beispielsweise eine Lampe, oder eine indirekte, das heisst beispielsweise ein Spiegel, der das Licht einer Lichtquelle in den gewünschten Richtungen reflektiert. Der Aussendurchmesser d des optisch wirksamen, dem zu inspizierenden Behälter zugewandten Teiles des Elementes 7.4 beträgt ca. 40mm.

Es zeigt sich, dass mit einem derartigen optischen Korrekturelement Bilder von Böden der genannten Softdrink-Flaschen erzeugt werden, die mit üblichen Bildverarbeitungsmitteln für eine Kontrolle der Böden vollauf genügende Resultate liefern.

Das in der Figur 8 dargestellte Korrekturelement wird vorteilhafterweise auch als Halteelement für den Behälter 3 eingesetzt. Es ist dann lateral, beispielsweise auf einer kreisförmigen Bahn bewegbar und um seine Rotationsachse drehbar auszugestalten. Es zeigt sich, dass mit einem derartigen Korrektur/Halteelement der Behälter 3 nicht nur über den ganzen Bereich des Behälterbodens inspiziert werden kann, sondern dass auch mit derselben oder einer weiteren Bildverarbeitung ein auf dem Boden vorhandener Code gelesen werden kann. Der Behälter kann dann zu weiteren Verarbeitungsstellen transportiert werden, wo beispielsweise ein Code geschrieben wird oder nach ei-einer entsprechenden Drehung des Behälters ein bereits vorhandener Code umgeschrieben oder ergänzt werden kann. Auch eine allseitige Inspektion der Behälterwände oder eine Leckmessung ist möglich, ohne dass der Behälter an ein weiteres Halteelement übergeben werden müsste.

Um den Anschluss der Stirnseite 71 des Korrekturelementes 7.4 an den Behälterboden zu verbessern kann unmittelbar vor der Inspektion Wasser zwischen die Stirnseiten 71 und den Behälterboden gedrückt werden oder die Stirnseite 71 kann mit einer gallertartigen Masse bedeckt sein.

**Figur 9** zeigt eine weitere Ausführungsform für ein Korrekturelement für dieselbe Anwendung, die bereits im Zusammenhang mit der Figur 8 beschrieben worden ist. Die Ausführungsform gemäss Figur 9 ist im wesentlichen beliebig ausgeformt, wobei aber mindestens ein Teil (71) der einen Stirnfläche wiederum an den Dom des zu inspizierenden Behälterbodens angepasst ist. Dies reicht aus, um erfindungsgemäss den Strahlungspfad zwischen der Strahlungsquelle und dem Bildaufnahmegerät zu schliessen.

## Patentansprüche

1. Verfahren zur optischen Inspektion eines strahlendurchlässigen, insbesondere lichtdurchlässigen Gegenstandes, wobei von mindestens einem Teil des Gegenstandes in einem Durchlichtverfahren mit Hilfe einer Strahlungsquelle (1) und eines Bildaufnahmegeräts (2) ein Bild erzeugt und dieses durch ein Bildverarbeitungsverfahren analysiert wird, **dadurch gekennzeichnet**, dass zur Verhinderung oder Aufhellung von unerwünschten Dunkel- oder Schwarzstellen auf dem erzeugten Bild, die durch Reflexion und/oder Brechung statisch oder dynamisch an Oberflächen des zu inspizierenden Gegenstandes (3) entstehen, mindestens ein optisches Korrekturelement (7, 7.1, 7.2, 7.3, 7.4) in dadurch zwischen Strahlungsquelle und Bildaufnahmegerät verlaufende Strahlengänge eingesetzt wird.

2. Verfahren nach Anspruch 1, **dadurch gekennzeichnet**, dass das optische Korrekturelement (7, 7.1, 7.2) unerwünschte Reflexion an Oberflächen des zu inspizierenden Gegenstandes (3) verhindert oder vermindert, dadurch dass es aus einem strahlungs- oder lichtdurchlässigen Material besteht und dass es dicht an mindestens einen Bereich der reflektierenden Oberfläche anschliesst.

3. Verfahren nach Anspruch 2, **dadurch gekennzeichnet**, dass das Korrekturelement aus einem Material besteht, das eine optische Dichte aufweist, die im wesentlichen gleich gross ist wie die optischen Dichte des Behältermaterials.

4. Verfahren nach Anspruch 2 oder 3, **dadurch gekennzeichnet**, dass das lichtdurchlässige Material fest, flüssig oder gallert- oder gelförmig ist.

5. Verfahren nach Anspruch 1, **dadurch gekennzeichnet**, dass das optische Korrekturelement (7, 7.3) Strahlen der Strahlungsquelle derart bricht oder reflektiert, dass sie zusammen mit einer Reflexion an der Oberfläche des zu inspizierenden Gegenstandes in das Bildaufnahmegerät gerichtet werden.

6. Verfahren nach Anspruch 5, **dadurch gekennzeichnet**, dass das optische Korrekturelement einen Spiegel (7.3), ein optisches Prisma (7) oder eine Linse aufweist.

7. Anordnung zur Durchführung des Verfahrens nach einem der Ansprüche 1 bis 6, welche Anordnung eine Strahlungsquelle (1) und ein Bildaufnahmegerät (2) aufweist sowie Mittel zur Positionierung eines zu inspizierenden, lichtdurchlässigen Gegenstandes (3) derart, dass mindestens ein Teil der durch die Strahlungsquelle erzeugten Strahlen während der für die Bildaufnahme notwendigen Zeit durch den Gegenstand auf das Bildaufnahmegerät gerichtet ist, **dadurch gekennzeichnet**, dass die Anordnung zusätzlich mindestens ein optisches Korrekturelement (7, 7.1, 7.2, 7.3, 7.4) aufweist, das in Strahlengängen zwischen Strahlungsquelle und Bildaufnahmegerät positioniert ist.

8. Anordnung nach Anspruch 7, **dadurch gekennzeichnet**, dass das optische Korrekturelement als strahlendurchlässiger, insbesondere lichtdurchlässiger Festkörper (7, 7.1) ausgebildet ist, dass dieser Festkörper weiter derart ausgestaltet und angeordnet ist, dass er dicht an wenigstens einen Bereich der reflektierenden Oberfläche des zu inspizierenden Gegenstandes anschliesst.

9. Anordnung nach Anspruch 8, **dadurch gekennzeichnet**, dass sie Mittel aufweist, mit denen Wasser oder eine andere Flüssigkeit zwischen die dicht aneinander anschliessenden Bereiche von Korrekturelement und zu inspizierendem Gegenstand pressbar ist.

10. Anordnung nach Anspruch 7, **dadurch gekennzeichnet**, dass das optische Korrekturelement (7.2) eine lichtdurchlässige Flüssigkeit ist, die derart positioniert ist, dass mindestens Bereiche der Oberflächen des zu inspizierenden Gegenstandes während mindestens der Zeit, die zur Bildaufnahme notwendig ist, in die Flüssigkeit eintauchen.

11. Anordnung nach Anspruch 7, **dadurch gekennzeichnet**, dass das optische Korrekturelement mindestens in dem Bereiche, in dem es dicht an den zu inspizierenden Gegenstand anschliesst, aus einer Gallerte oder einem Gel besteht.

12. Anordnung nach einem der Ansprüche 8 bis 11, **dadurch gekennzeichnet**, dass das optische Korrekturelement zwischen Strahlungsquelle und zu inspizierendem Gegenstand angeordnet ist.

13. Anordnung nach Anspruch 7, **dadurch gekennzeichnet**, dass das optische Korrekturelement (7.3) einen Spiegel, ein Prisma oder eine Linse aufweist und dass es in Strahlengänge positioniert ist, die zudem eine Reflexion an Bereichen von Oberflächen des zu inspizierenden Gegenstandes aufweisen.

14. Anordnung nach einem der Ansprüche 8, 9, 11 oder 12, **dadurch gekennzeichnet**, dass der zu inspizierende Gegenstand (3) ein Behälterboden (5) mit Dom ist und dass das optische Korrekturelement im wesentlichen ein zylinder- oder hohlzylinderförmig ist, und dass mindestens ein Teil seiner einen Stirnfläche (71) mindestens annähernd der Form des Domes entspricht und von der Aussenseite des Behälterbodens an diesen anschliessbar ist.

15. Anordnung nach Anspruch 14, **dadurch gekennzeichnet**, dass der zu inspizierende Gegenstand der Boden eines PET-Behälters ist und das optische Korrekturelement aus für die Strahlung mindestens teilweise durchlässigem Kunststoff besteht.

16. Anordnung nach Anspruch 15, **dadurch gekennzeichnet**, dass der zu inspizierende Behälter eine PET-Flasche für Softdrinks ist.

17. Optisches Element zur Durchführung des Verfahrens nach einem der Ansprüche 1 bis 6 oder für eine Anordnung nach einem der Ansprüche 7 bis 16.

18. Abfüllinie mit einer Anordnung zur Inspektion von abzufüllenden Behältern nach einem der Ansprüche 7 bis 16 zur Durchführung des Verfahren nach einem der Ansprüche 1 bis 6.
